# EUROPEAN PATENT APPLICATION

(11) **EP 2 852 171 A1**
(43) Date of publication of application: **25.03.2015**
(21) Application number: 13790976.8
(22) Date of filing: 15.05.2013
(51) Int. Cl.: H04N 21/63

(54) **SYSTEM FOR IMPROVING HDMI CEC PERFORMANCE, AND METHOD FOR CONTROLLING SAME**

(30) Priority: 15.05.2012 US 201261646913 P; 24.05.2012 US 201261651511 P
(71) Applicant: LG Electronics Inc., Youngdungpo-gu, Seoul 150-721 (KR)
(72) Inventor: LEE, Jaekoo, Seoul 137-724 (KR); LEE, Hyeonjae, Seoul 137-724 (KR); YANG, Seungryul, Seoul 137-724 (KR)
(74) Representative: Katérle, Axel
(86) International application number: PCT/KR2013/004325
(87) International publication number: WO 2013/172662

(57) **Abstract**

The present invention provides a method for controlling a HDMI CEC device on HDMI CEC network including a plurality of devices, the method comprising: receiving a message for requesting a physical address allocation of a new device when the new device is connected to the HDMI CEC network; allocating a physical address of the new device based on the received message; and allocating a plural logical addresses of the new device when the physical address of the new device is valid, the plural logical addresses corresponding to the plural device types of the new device, wherein at least one of the plural logical addresses is set by using a flag bit.

## Description

### [TECHNICAL FIELD]

The present invention relates to a control method for enhancing the capability of an HDMI CEC system and a device using an HDMI CEC system.

### [BACKGROUND ART]

The digital multimedia interface plays a role to transfer video data digitally encoded from a video signal transmitting device, such as an STB, DVR, AVR, or PC, to a TV, monitor, or other video receiving devices. Among digital multimedia interfacing schemes between such AV devices, HDMI (High-Definition Multimedia Interface) is a representative technique that wiredly transmits uncompressed AV data at high speed.

There is recent increasing demand for high-quality videos and 3D videos, such as UHD and 21:9 digital cinema, requiring high-speed data transmission. Further, the requirement for content frame rate is being gradually increased from conventionally 24/30Hz to 60Hz and 120Hz to remove video motion blur and after images, and the requirement for color depth that may be represented per pixel is being steadily increased from existing 8 bits to 10 bits and 12 bits, as well. As such, as the data size of content is on the rise, HDMI or other high-speed multimedia interfacing techniques are being created for transferring high-volume content between AV devices, and such techniques are under discussion for bandwidth expansion.

The HDMI technique adds audio transmission to DVI (Digital Visual Interface) that is a standard for interfacing between personal computers and monitors. In this technique, digitalized video and sound sources are transmitted without compression, and little latency is thus created between a source and a sink. Further, there is no need for supporting codec through a chip or software, thus offering high format compatibility. Further, videos, voices, and control signals are transmitted through a single cable, thus providing simplified wiring between applicable AV devices. HDMI also supports HDCP (High-bandwidth Digital Content Protection) for protection from illegal copying. Therefore, HDMI is currently in wide use as a multimedia interface.

However, the present HDMI CES system is inappropriate for description of devices having multiple functions and characteristics. Further, HDMI CEC bit timing is not clearly defined yet. Accordingly, it may malfunction due to unnecessary resource waste upon bit sampling and wrong sampling.

Since HDMI CEC using a bus interface supports only insufficient information transmission speed, the HDMI system does not fit high-speed processing and thus fails to back up functions requiring real-time command processing. The logical addresses which are unique identification information of HDMI CEC are not enough to be allocated to the same type of devices. The existing bus interface has problems with compatibility or expandability with IP interface that takes up a large part of a home network and is thus limited to performing only independent commands over the home network.

### [SUMMARY]

### [OBJECTS]

To solve the above problems,
the present invention intends to redefine an operand to allow HDMI CEC to describe a device having multiple functions and characteristics
while remaining compatible with the devices using the existing commands, and the present invention intends to define commands that may support the same.

Further, the present invention intends to clarify bit characteristics of HDMI CEC to enhance the efficiency of resources relating to bit sampling and defines a sampling period to determine an HDMI CEC signal value.

Further, the present invention intends to define a new mode to be able to support high-speed transmission mode in HDMI CEC and define a decision protocol by which the corresponding mode may be determined.

Further, the present invention intends to define a protocol for a method that may enable the logical addresses used to be allocated through a single characteristic (function) to be allocated to various characteristics (devices) and also intends to define a method for expanding a logical address using a unique identifier that may be possessed by each device other than the logical address.

Further, the present invention intends to define commands that enable exchange of IP interface information between a bus interface and a PC or mobile device connected with the IP interface, for example, a PC device where HDMI and IP are connected with each other.

### [CONFIGURATIONS]

The present invention provides a method for controlling a HDMI CEC device on HDMI CEC network including a plurality of devices, the method comprising: receiving a message for requesting a physical address allocation of a new device when the new device is connected to the HDMI CEC network; allocating a physical address of the new device based on the received message; and allocating a plural logical addresses of the new device when the physical address of the new device is valid, the plural logical addresses corresponding to the plural device types of the new device, wherein at least one of the plural logical addresses is set by using a flag bit.

Further, in the present invention, the plural device types include a first device type and a second device type of the new device, the first device type being determined based on the new device's characteristics.

Further, in the present invention, the method further comprises transmitting a physical address message to other devices within the HDMI CEC network, the physical address message indicating the first device type of the new device, wherein the physical address message indicates the association between the physical address and at least one of the plural logical addresses of the new device.

Further, in the present invention, the method comprises transmitting a feature report message to other devices within the HDMI CEC network, the feature report message indicating characteristics of the new device.

Further, in the present invention, the plural device types include at least one of TV, recording device, tuner, playback device, audio system, CEC switch, and processor.

Further, in the present invention, the step for allocating a plural logical addresses comprises:
transmitting a first polling message to a first logical address, the first polling message being a message indicating whether the first logical address is used by other device;
receiving a first response message in response to the first polling message; and if the first logical address is not used by the other device, allocating the first logical address of the new device, and if the first logical address is used by the other device, transmitting a second polling message to a second logical address, the second polling message being a message indicating whether the second logical address is used by other device.

Further, in the present invention, if the first logical address is used by the other device, the method further comprising: receiving a second response message in response to the second polling message; and checking whether the second logical address is the last logical address when the second logical address is used by the other device; checking whether the new device has other device type when the second logical address is the last logical address; and if the new device has the other device type, performing a logical address allocation process corresponding to the other device type, and if the new device don't have the other device type, allocating unregistered logical address.

Further, in the present invention, the received message is comprised of a frame including a start bit and data bits, and a sampling period of the data bits is equal to or smaller than a predetermined value.

Further, the present invention provides a HDMI CEC device on HDMI CEC network including a plurality of devices, the HDMI CEC device comprising: a communication unit configured to receive a message for requesting a physical address allocation of a new device when the new device is connected to the HDMI CEC network; a central processing unit configured to allocate a physical address of the new device based on the received message, and to allocate a plural logical addresses of the new device when the physical address of the new device is valid, the plural logical addresses corresponding to the plural device types of the new device, wherein at least one of the plural logical addresses is set by using a flag bit.

Further, in the present invention, the HDMI CEC device further comprises the communication unit configured to transmit a physical address message to other devices within the HDMI CEC network, the physical address message indicating the first device type of the new device, wherein the physical address message indicates the association between the physical address and at least one of the plural logical addresses of the new device.

Further, in the present invention, the central processing unit further configures to: transmit a first polling message to a first logical address, the first polling message being a message indicating whether the first logical address is used by other device; receive a first response message in response to the first polling message; and if the first logical address is not used by the other device, allocate the first logical address of the new device, and if the first logical address is used by the other device, transmit a second polling message to a second logical address, the second polling message being a message indicating whether the second logical address is used by other device.

### [EFFECTS]

The present invention redefines an operand to allow HDMI CEC to describe a device having multiple functions and characteristics and defines commands that may support the same. Accordingly, the characteristics (functions) of the HDMI CEC devices having various characteristics (functions) may be clearly delivered to other devices, reducing unnecessary use of commands while increasing the efficiency of the bus interface.

Further, the present invention defines a sampling period for determining an HDMI CEC signal value to thus enhance the efficiency of resources relating to bit sampling while minimizing malfunction that may occur due to wrong sampling.

Further, the present invention defines a new mode that may enable HDMI CEC to support a high-speed transmission mode and a decision protocol to enable the corresponding to be determined, enabling command processing speed. Accordingly, more satisfaction may be offered to the user, and services requiring real-time response and command processing may be smoothly provided.

Further, the present invention defines a protocol for a method that enables allocation to various characteristics (devices) and defines a method for expanding a logical address using a unique identifier that may be possessed by each device other than the logical address, offering convenience in management of the DL CC logical addresses and expandability.

Further, the present invention defines commands that enable exchange of IP interface information between a bus interface and a PC or mobile device connected with the IP interface, for example, a PC device where HDMI and IP are connected with each other, thus configuring an integrated topology network between the bus interface and other interface/protocol topology to enable mutual commanding.

### [BRIEF DESCRIPTION OF DRAWINGS]

Fig. 1 is a block diagram schematically illustrating an HDMI CEC system according to an embodiment of the present invention.
Fig. 2 illustrates the structure of a data block and a header block transmitted in an HDMI CEC system according to an embodiment of the present invention.
Fig. 3 is a block diagram illustrating a physical address allocation algorithm of devices in an HDMI CEC system according to an embodiment of the present invention.
Fig. 4 is a flowchart illustrating a logical address allocation algorithm of devices in an HDMI CEC system according to an embodiment of the present invention.
Fig. 5 is a flowchart illustrating a logical address allocation algorithm of devices in an HDMI CEC system according to another embodiment of the present invention.
Fig. 6 is a flowchart illustrating a process of requesting and responding device information between devices in an HDMI CEC system according to an embodiment of the present invention.
Fig. 7 is a flowchart illustrating a process of requesting and responding device information between devices in an HDMI CEC system, when a new device makes a connection in the HDMI CEC system, according to an embodiment of the present invention.
Fig. 8 illustrates a screen that outputs device information of devices in an HDMI CEC system according to an embodiment of the present invention.
Fig. 9 is a flowchart illustrating a process of requesting and responding additional device information between devices in an HDMI CEC system according to an embodiment of the present invention.
Fig. 10 is a flowchart illustrating a process of requesting and responding additional device information between devices in an HDMI CEC system, when a new device makes a connection in the HDMI CEC system, according to an embodiment of the present invention.
Figs. 11 and 12 are sequence diagrams illustrating modes that enable high-speed transmission from a bus interface to an HDMI CEC system according to embodiments of the present invention.
Fig. 13 is a sequence diagram illustrating expansion of logical addresses of devices in an HDMI CEC system according to an embodiment of the present invention.
Fig. 14 is a sequence diagram illustrating a method of defining a command that enables exchange of information on an IP interface in an HDMI CEC system according to an embodiment of the present invention.

### [DESCRIPTION OF EMBODIMENTS]

Hereinafter, the configurations and operations of embodiments of the present invention are described with reference to the accompanying drawings. However, such configurations and operations are merely provided as examples, and the technical spirit and core configurations and operations of the present invention are not limited thereto.

General terms are used in describing the present invention, but in particular cases, some terms are defined by the applicant. Such defined terms are clearly described in a relevant part of the description. Thus, it should be noted that the terms defined herein should be interpreted by referring to the meaning of such terms.

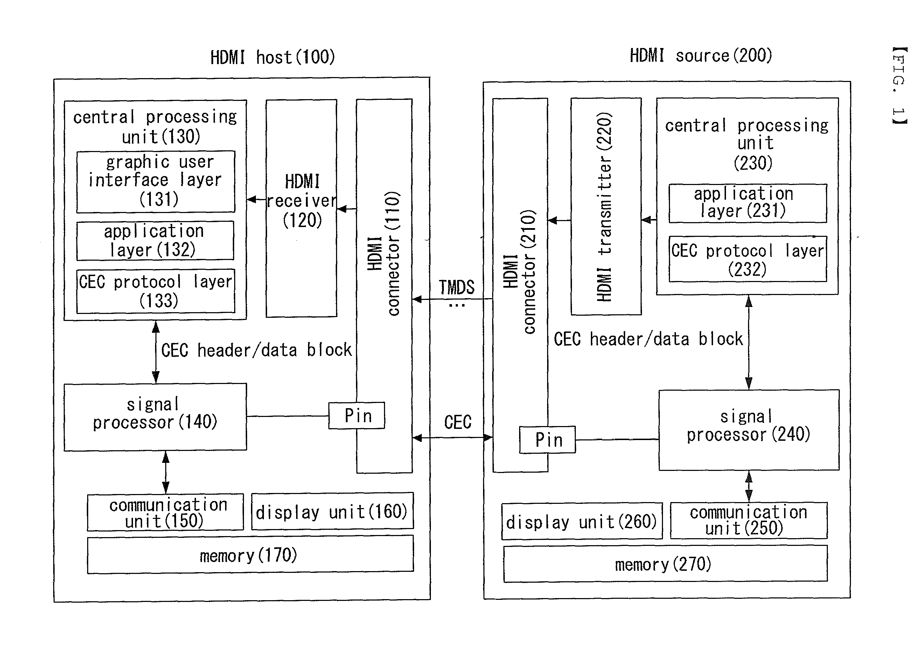

Fig. 1 is a block diagram schematically illustrating an DL CC system according to an embodiment of the present invention.

HDMI stands for High-Definition Multimedia Interface and means a multimedia access device that may transmit signals without compression. Hereinafter, such device is denoted as HDMI.

HDMI CEC stands for HDMI Consumer Electronics Control and means a protocol that offers a function that enables the user to control a number of multimedia products connected to one another via HDMI cables in a network by a single operation. Hereinafter, such protocol is denoted as HDMI CEC.

As shown in Fig. 1, an HDMI CEC system may largely include an HDMI host 100 and an HDMI source 200. The HDMI host 100 may include an HDMI connector 110, an HDMI receiver 120, a central processing unit (CPU) 130, a signal processor 140, a communication unit 150, a display unit 160, and a memory 170. The HDMI source 200 may include an HDMI connector 210, an HDMI transmitter 220, a central processing unit (CPU) 230, a signal processor 240, a communication unit 250, a display unit 260, and a memory 270.

According to various embodiments of the present invention, depending on circumstances, the HDMI host 100 may be referred to as a sink device, receiver, or initiator, and the HDMI source 200 may be referred to as a source device, transmitter, or follower.

Here, the initiator means a device that initiates, transfers, and controls signals, and the follower means a device that responds to a command and requests and informs a result.

The HDMI host 100 may include, e.g., a TV and a repeater, and the HDMI source 200 may include, e.g., a DVD player, a set-top box (STB), a personal computer, a laptop computer, and a recorder.

The HDMI connector 110 or 210 may include five types of connectors, e.g., types A, B, C, D, and E. For example, type A may be a common HDMI connector with 19 pins, type B a connector with 29 pins for transmitting UHD videos, type C a mini connector with 19 pins, type D a micro connector with 19 pins, and type E a connector for vehicles.

The HDMI transmitter 220 and the HDMI receiver 120 may include three TMDS (Transition Minimized Differential Signaling) data transmission channels for transmitting multimedia information through the HDMI connectors 110 and 210 and control channels such as a clock channel, a DDC (Display Data Channel) (not shown), a CEC (Consumer Electronics Control) channel, a utility channel (not shown), an HPD (Hot Plug Detect) channel (not shown).

The TMDS channels include three data transmission channels and transmit video and audio data.

The CEC channel is a control channel that transfers a CEC protocol that is a control command to enable HDMI-connected devices to be controlled by a TV remote controller. Use of the functions enables "one-touch play." In other words, devices connected to each other via HDMI may be controlled by a single remote controller with the need of separately controlling the devices, as if HDMI-connected media players may be controlled through a single TV remote controller. Accordingly, better user convenience may be provided.

The CPU 130 of the HDMI host 100 may include a graphic user interface (GUI) layer 131, an application layer 132, and a CEC protocol layer 133. The CPU 230 of the HDMI source 200 may include an application layer 231 and a CEC protocol layer 232.

The GUI layer 131 processes data received through the HDMI receiver 120 to be output through a GUI interface. The application layers 132 and 231 process data in a manner defined by the user, and the CEC protocol layers 133 and 232 process the transmitted CEC data and transfer necessary information to an upper layer. The CEC protocol layers 133 and 232 may perform, e.g., allocation of a physical address and logical address according to the present invention.

The signal processors 140 and 240 of the HDMI host 100 and the HDMI source 200 generate signals for data transmission or manage transmission priority and retransmission for reliable transmission. For example, the signal processors 140 and 240 may perform frame transmission, line error handling, and frame validation. Further, the signal processors 140 and 240 function as an interface that performs HDMI CEC signal processing through per-frame data communication with the CPUs 130 and 230.

For example, the signal processors 140 and 240 according to the present invention may process messages or data, such as commands, requests, actions, and responses between devices.

The bus interface (not shown) enables transmission of messages or data such as commands, requests, actions, and responses between devices. The display units 160 and 260 output the transmitted messages or data to the outside.

The memories 170 and 270 store the transmitted messages or data. The memories 170 and 270 may retain table information regarding the device type and characteristics according to the present invention, as described below.

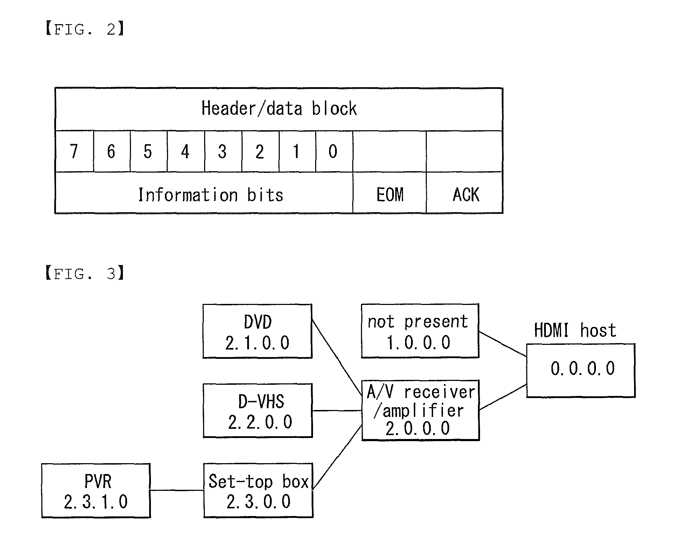

Fig. 2 illustrates the structure of a data block and a header block transmitted in an HDMI CEC system according to an embodiment of the present invention.

A data frame transmitted in an HDMI CEC system may include a start bit, a header block, a first data block, and a second data block. The header block includes a source address and a destination address. The first data block includes an opcode block, and the second data block includes an operand block. Here, the term "opcode" means a denotation used to identify a message.

Referring to Fig. 2, each of the data block and the header block may include an information bits field, an EOM (End Of Message) field, and an ACK field. The information bits field may include data, an opcode or an address. The EOM field includes a bit to indicate whether a block is the last block of a message. For example, the EOM field being 0 may indicate that there are one or more data blocks, and the EOM field being 1 may indicate that the message has been done. Even when a message includes additional data after the EOM field has been transmitted, the device receiving the message should discard the same.

Fig. 3 is a block diagram illustrating a physical address allocation algorithm of devices in an HDMI CEC system according to an embodiment of the present invention.

All of the devices in an HDMI CEC system according to the present invention should have their respective physical addresses to activate the HDMI CEC function. In case a device is newly added to the HDMI CEC system, a physical address allocation mechanism should be conducted.

Referring to Fig. 3, an HDMI host device should perform a physical address allocation mechanism regardless of whether to support the CEC function. Other devices might not allocate physical addresses unless the CEC function is supported. A physical address may include 4 digits.

Referring to Fig. 3, the HDMI host device generates a physical address 0.0.0.0 and reads the address from EDID (Extended Display Identification Data) therein. Here, the term "EDID" refers to a data structure that retains display device information such as type, screen size, or pixels of the display device.

The HDMI host device should generate a physical address of an HDMI source device connected thereto. A portion of the EDID VSDB (Vendor Specific Data Block) of the HDMI source device is used for the physical address. As a method for generating a physical address of an HDMI source device, a subsequent digit may be incremented by one whenever the HDMI source device shifts down to a lower layer. For example, referring to Fig. 3, a physical address, 1.0.0.0, may be allocated to a device that is not present, and a physical address, 2.0.0.0, may be allocated to an A/V receiver or amplifier. In case a DVD, D-VHS, and set-top box (STB) is connected to a lower layer of the A/V receiver or amplifier, physical addresses, 2.1.0.0, 2.2.0.0, and 2.3.0.0, respectively, may be allocated to the DVD, D-VHS, and STB. Further, in case a PVR is connected to a lower layer of the STB, a physical address, 2.3.1.0, may be allocated to the PVR.

According to another embodiment of the present invention, if a new physical address is discovered, the CEC device (hereinafter, "initiator") should perform at least one of the following operations:
1) Allocation of logical address
2) Informing supportable characteristics by broadcasting <characteristic report> messages indicating the characteristics of a corresponding device.
3) Informing the association between logical address and physical address by broadcasting <physical address report> messages indicating a primary device type

The <characteristic report> message and the <physical address report> message may be transmitted to other device (hereinafter, "follower") in the HDMI CEC system. The <characteristic report> message may be transmitted before the <physical address report> message is transmitted, so that the follower may identify a corresponding device. Further, the <physical address report> message may be adapted to be transmitted within a predetermined time after the <characteristic report> message is transmitted. For example, the predetermined time may be 1 sec.

When receiving the <characteristic report> message or <physical address report> message, the follower should not request a message that causes the initiator to make a broadcast message response to prevent message duplication.

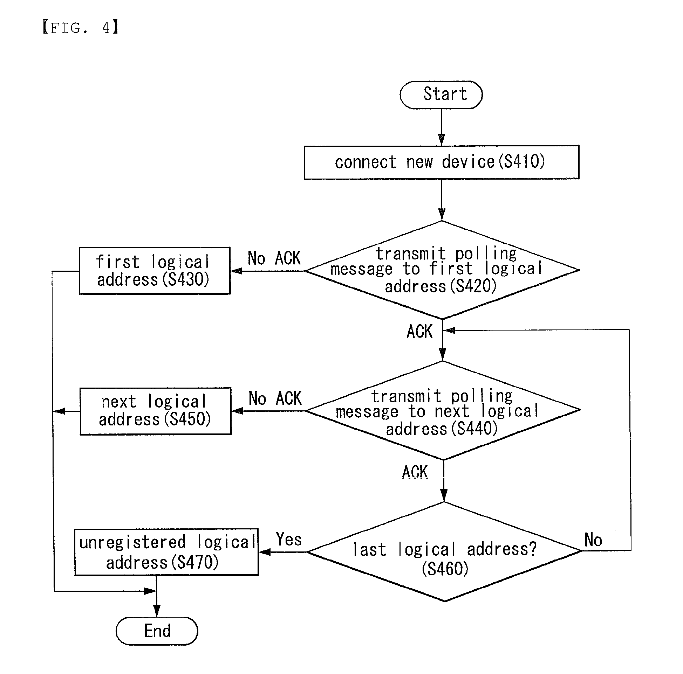

Fig. 4 is a flowchart illustrating a logical address allocation algorithm of devices in an HDMI CEC system according to an embodiment of the present invention.

According to an embodiment of the present invention, each of the devices in the HDMI CEC system may have one logical address. Each logical address represents a function unique to its corresponding device only and may be shown in the following Table 1:

**[Table 1]**

| address | device |
|---|---|
| 0 | TV |
| 1 | Recording Device 1 |
| 2 | Recording Device 2 |
| 3 | Tuner 1 |
| 4 | Playback Device 1 |
| 5 | Audio System |
| 6 | Tuner 2 |
| 7 | Tuner 3 |
| 8 | Playback Device 2 |
| 9 | Recording Device 3 |
| 10 | Tuner 4 |
| 11 | Playback Device 3 |
| 12 | Reserved |
| 13 | Reserved |
| 14 | Free Use |
| 15 | Unregistered (as initiator address) Broadcast (as destination address) |

A device having one or more functions are rendered to have logical addresses respectively corresponding to the functions. For example, a DVD recorder having a tuning function may have one of functions 1, 2, and 9 related to recording and one of addresses 3, 6, and 6 related to a tuner.

A logical address may be allocated only when a physical address is valid. For example, when a physical address is not F.F.F.F, a logical address may be allocated, and otherwise, logical address 15 (Unregistered) may be allocated. As another example, a TV having a physical address, 0.0.0.0, may be allocated with a logical address, 0, and a TV having other physical address than 0.0.0.0 may be allocated with logical address 14 (Free Use). In this case, if logical address 14 (Free Use) already remains allocated, logical address 15 (Unregistered) may be allocated.

Referring to Fig. 4, the logical address allocation mechanism according to the present invention may be performed by a newly connected device (S410). The newly connected device is allocated with a first logical address and transmits a polling message to the first logical address (S420). If the polling message is not authorized, the newly connected device uses the first logical address (S430), and if the polling message is authorized, the newly connected device is reallocated with a next logical address (S440). However, unless the polling message is authorized, the next logical address is allocated (S450).

Meanwhile, in case the next logical address is being used, it is identified whether the next logical address is a last logical address (S460). If the next logical address is identified to be the last logical address, an unregistered logical address is allocated (S470).

Such process of authorizing the polling message may go on until an unused logical address is discovered.

For example, if the newly connected device is allocated with logical address 1 (Recording Device 1), the polling message is transmitted to the logical address 1 (Recording Device 1). Unless the polling message is authorized, it indicates that none of the devices are using the logical address 1 (Recording Device 1). Accordingly, the logical address allocation process stops, and the newly connected device uses the logical address 1 (Recording Device 1).

In contrast, if the polling message is authorized, it indicates that the logical address 1 (Recording Device 1) has been allocated to other device. Thus, a next logical address is reallocated, and the polling message may be retransmitted until an unused logical address is discovered.

The above process may be sequentially performed from logical address 0 (TV) up to logical address 15 (Unregistered) as mentioned above in Table 1.

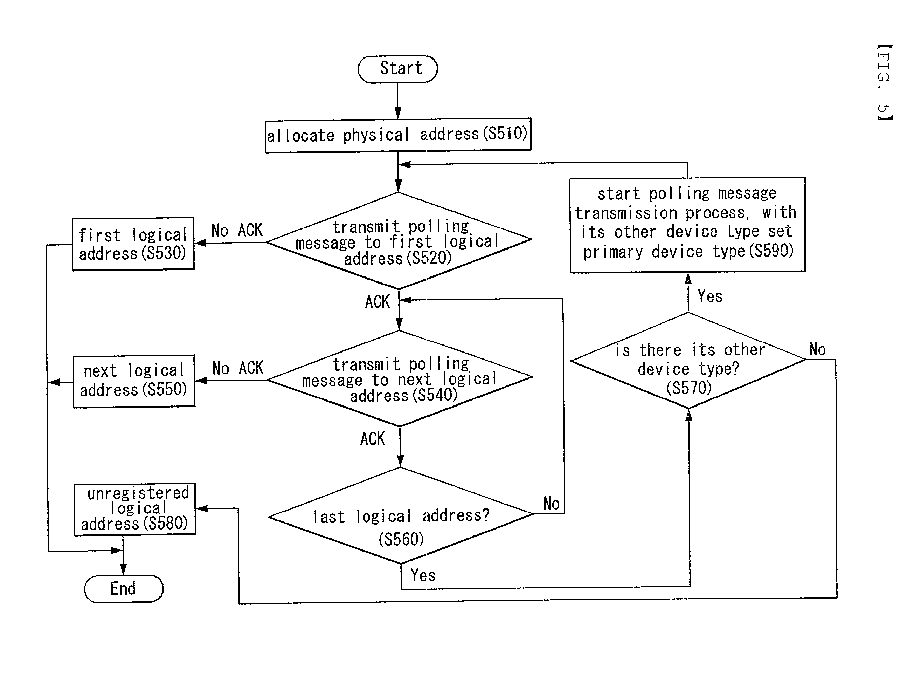

Fig. 5 is a flowchart illustrating a logical address allocation algorithm of devices in an HDMI CEC system according to another embodiment of the present invention.

According to an embodiment of the present invention, each device in the HDMI CEC system may have multiple logical addresses, and in such case, device types may be defined as shown in the following Table 2 or device characteristics may be defined as shown in the following Table 3.

In order to report the multiple logical addresses to other devices in the system, a predetermined logical address value may be used for a primary device type, while flag bit-type transmission may be performed in the data block for a secondary device type.

**[Table 2]**

| | Device type | Address |
|---|---|---|
| Primary device type | TV | 0 |
| | Recording Device | 1 |
| | Reserved | 2 |
| | Tuner | 3 |
| | Playback Device | 4 |
| | Audio System | 5 |
| | Pure CEC Switch | 6 |
| | Video Processor | 7 |
| Secondary device type | TV | bit 0 |
| | Recording Device | bit 1 |
| | Tuner | bit 2 |
| | Playback Device | bit 3 |
| | Audio System | bit 4 |
| | Reserved | bit 5 |
| | Reserved | bit 6 |
| | Reserved | bit 7 |

Further, as shown in the following Table 3, flag bit-type transmission may be performed in the data block for device characteristics additionally supportable, so that information on the functions supportable by a corresponding device may be obtained while solving problems that may occur due to transmission of unsupported commands.

**[Table 3]**

| | Description | logical address |
|---|---|---|
| device characteristic | One touch power & routing | bit 0 |
| | Language & Menu Control | bit 1 |
| | Deck control | bit 2 |
| | Audio control | bit 3 |
| | Remote control pass-through | bit 4 |
| | Audio System | bit 5 |
| | Reserved | bit 6 |
| | Reserved | bit 7 |
| device characteristic | Reserved | bit 0 |
| | Reserved | bit 1 |
| | Reserved | bit 2 |
| | Reserved | bit 3 |
| | Reserved | bit 4 |
| | Reserved | bit 5 |
| | Reserved | bit 6 |
| | Reserved | bit 7 |

According to an embodiment of the present invention, each device in the HDMI CEC system may have one primary device type set forth in Table 2 based on its respective device characteristic, and the same may be informed to other devices in the HDMI CEC system.

Here, the term "device characteristic" may refer to a unique function that is possessed by a device itself. For example, in case the device type is TV, the device characteristic may be enabling video to be played on the screen through an HDMI input end. In case the device type is Recording Device, the device characteristic may be a device with a recording function that enables "one touch recording," a CEC function. In case the device type is Tuner, the device characteristic may be a device with a tuning function that enables Tuner Control, a CEC function, and in case the device type is Playing Device, the device characteristic may be a device other than a recording device or a tuner.

Further, in case the device type is Audio System, the device characteristic may be enabling audio to be played through the HDMI input end. In case the device type is Pure CEC Switch, the device characteristic may be a device without any other functions or device type. Further, in case the device type is Video Processor, the device characteristic should include at least one of the following characteristics: i) including an HDMI output end and at least one input end, ii) having its own physical address, iii) outputting input video, with or without the video modified, iv) requiring direct address allocation, v) should not have other device type, and vi) should not be an active source.

Referring to Fig. 5, each device in the HDMI CEC system may have multiple logical addresses, and in such case, device characteristics as shown in Tables 2 and 3 above may be utilized.

For example, a physical address allocation process may be first performed on a target CEC device (S510). The target device is allocated with a first logical address and transmits a polling message to the first logical address (S520). If the polling message is not authorized, the target device uses the first logical address (S530), and if the polling message is authorized, the newly connected device is reallocated with a next logical address (S540). However, unless the polling message is authorized, the next logical address is allocated (S550).

Meanwhile, in case the next logical address is being used, it is identified whether the next logical address is a last logical address (S560). If the next logical address is identified to be the last logical address, it may be identified whether there is other device type of the target CEC device. If it is identified that there is other device type, a logical address allocation process corresponding to the other device type is performed (S590), and unless there is other device type, an unregistered logical address may be allocated (S580).

According to an embodiment of the present invention, a general source device, e.g., a device other than a sink device in the HDMI CEC system, may select Playback Device as primary device type. Examples of the general source device may include a media player, a PC, game console, a photo camera, a set-top box with no tuning function, a device converting analog signals to HDMI signals.

According to an embodiment of the present invention, a device intending to informing multiple device types should select one primary device type from the list shown in Table 2 above and should attempt to allocate a logical address according to the selected primary device type. Further, the device should report the selected primary device type in <primary device type> of the <physical address report> message. The device should report all supportable device types.

According to an embodiment of the present invention, when multiple device types are combined in one device, a separate logical address, together with the device types, should be known. Accordingly, the device may have two logical addresses.

For example, a home theater system may be assumed as a combination of the first device type being Audio System and the second device type being Playback/Recording Device. As another example, a TV having a playing device and a recorder may be assumed as a combination of the first device type being TV and the second device type being Playback/Recording Device.

In the home theater system example, the home theater system may allocate logical address 5 (Audio System) and one of logical address 4, 8, and 11 (Playback Device) from

Table 1 above, and may report the same as primary device type.

For the two logical addresses, the home theater system may report the device type of the corresponding device by setting a value to a bit corresponding to Audio System while setting a value to a bit corresponding to Playback Device.

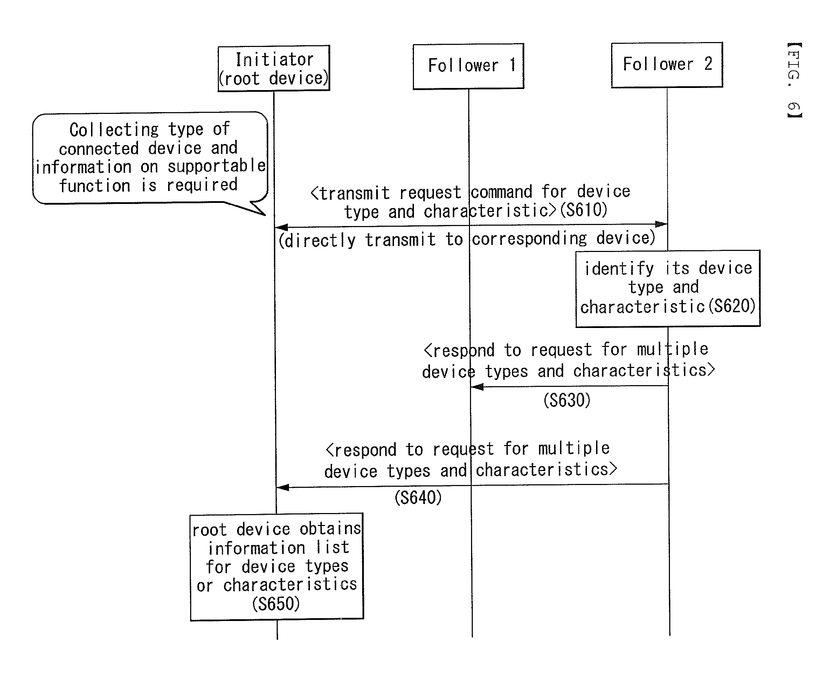

Fig. 6 is a flowchart illustrating a process of requesting and responding device information between devices in an HDMI CEC system according to an embodiment of the present invention.

An initiator (root device) managing connection in a bus architecture may transmit a request command to a corresponding device (follower 2) to collect the device type of devices connected in the HDMI CEC system and information regarding supportable functions (S610).

When receiving the information providing request command for the device type and information regarding supportable functions from the initiator (root device), the device (follower 2) may identify its device type and characteristic (S620). The device (follower 2) may transmit a response to all other connected devices (e.g., follower 1) as well as the initiator (root device) in the form of a response command (S630, S640).

Accordingly, the initiator (root device) may obtain an information list for the supportable functions and the device type of the devices connected in the HDMI CEC system (S650).

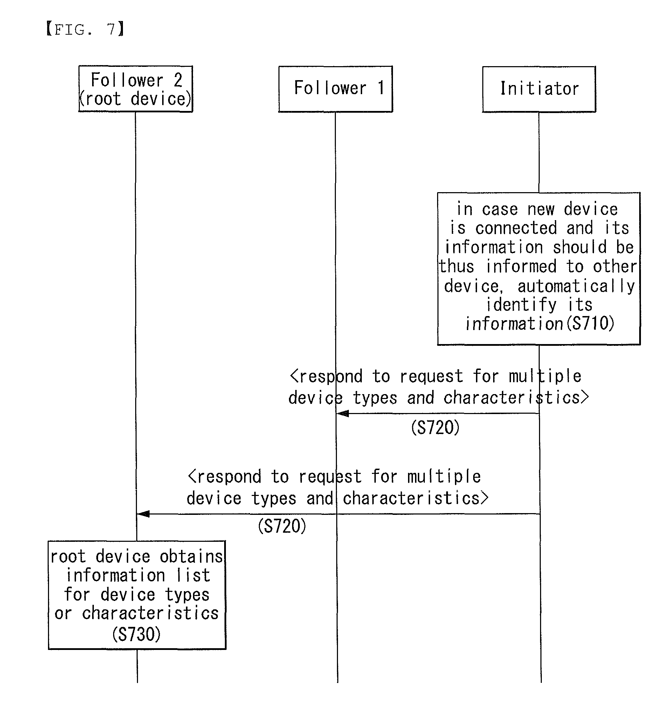

Fig. 7 is a flowchart illustrating a process of requesting and responding device information between devices in an HDMI CEC system, when a new device makes a connection in the HDMI CEC system, according to an embodiment of the present invention.

If a device is newly connected in the HDMI CEC system, the newly connected device may inform its information to other devices, and in such case, the newly connected device becomes an initiator.

The initiator may receive the information request command regarding supportable functions and device type from follower 2 (root device) and accordingly may automatically identify its device type and information on supportable functions to transfer the same in the form of a command (S710). In such case, the initiator may transmit a response to all other connected devices (e.g., follower 1) as well as follower 2 (root device) in the form of a command (S720).

Accordingly, follower 2 (root device) may obtain an information list for the supportable functions and the device type of the devices connected in the HDMI CEC system (S730).

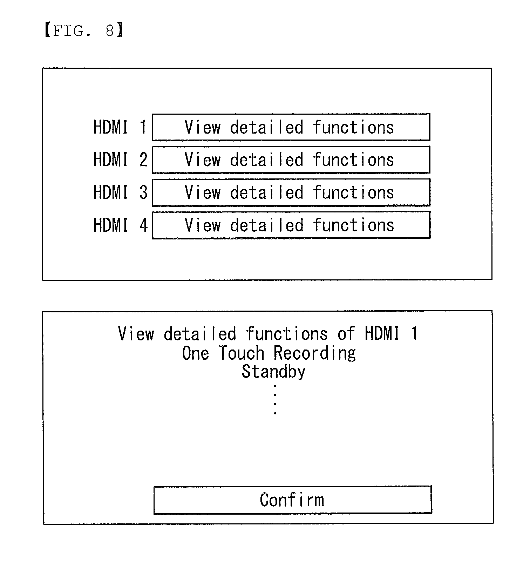

Fig. 8 illustrates a screen that outputs device information of devices in an HDMI CEC system according to an embodiment of the present invention.

Referring to Fig. 8, assuming that the devices connected in the HDMI CEC system are HDMI 1, HDMI 2, HDMI 3, and HDMI 4, respectively, each device may identify its device type and information on supportable functions and transmit the same to the root device as described above in connection with Figs. 6 and 7. The transmitted functions may be output as shown in Fig. 8, thus offering a user interface.

For example, if the user clicks "view detailed functions of HDMI 1," a "view detailed functions of HDMI 1" screen is output displaying various functions provided from HDMI 1, for example, one touch recording or standby. Accordingly, the user may select and use the devices connected in the HDMI CEC system according to the functions of the devices, in a convenient manner.

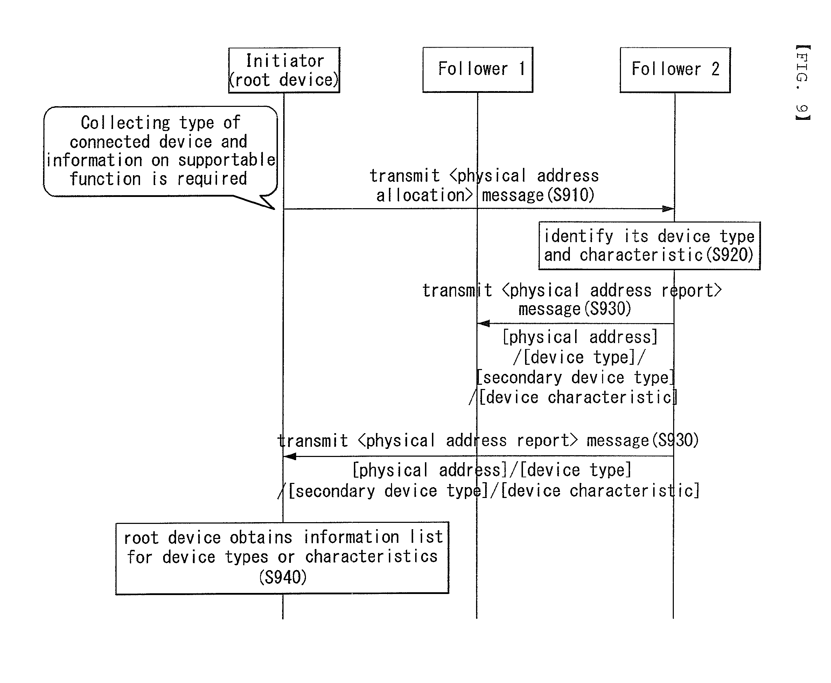

Fig. 9 is a flowchart illustrating a process of requesting and responding additional device information between devices in an HDMI CEC system according to an embodiment of the present invention.

According to an embodiment of the present invention, a <physical address allocation> message and a <physical address report> message may be redefined to inform supportable functions as well as supportable device types and physical addresses. In this case, an operand may be separated into a [device characteristic] and a [secondary device type] transferring new information to a [device type] for compatibility with the existing devices. The [secondary device type] and the [device characteristic] have been described above in connection with Tables 2 and 3.

An initiator (root device) managing connection in a bus architecture may transmit a <physical address allocation> message to a corresponding device (follower 2) to collect the device type of devices connected in the HDMI CEC system and information regarding supportable functions (S910).

Follower 2 may automatically identify its device type and information on supportable functions (S920) and may transfer the same in the form of a <physical address report> message (S930). In this case, follower 2 may perform transmission in the form of the [secondary device type] and the [device characteristic] that transfer new information to the [device type] as shown in Tables 2 and 3, in order to inform its device type and supportable functions. Follower 2 may likewise transmit the data to all other connected devices (e.g., follower 1) as well as the initiator (root device) in the form of a response command (S930).

Accordingly, the initiator (root device) may obtain an information list for the supportable functions and the device type of the devices connected in the HDMI CEC system (S940).

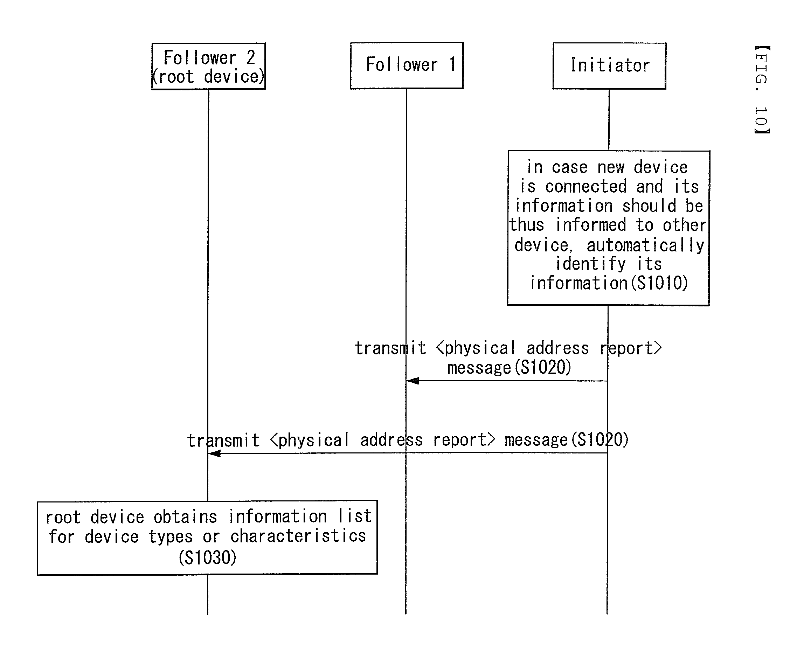

Fig. 10 is a flowchart illustrating a process of requesting and responding additional device information between devices in an HDMI CEC system, when a new device makes a connection in the HDMI CEC system, according to an embodiment of the present invention.

If a device is newly connected in the HDMI CEC system, the newly connected device may inform its information to other devices, and in such case, the newly connected device becomes an initiator.

The initiator may receive the <physical address allocation> message from follower 2 (root device) and thus may automatically identify its device type and information on supportable functions (S1010) and may transfer the same in the form of a <physical address report> message. In such case, the initiator may transmit a response to all other connected devices (e.g., follower 1) as well as follower 2 (root device) (S1020).

Accordingly, follower 2 (root device) may obtain an information list for the supportable functions and the device type of the devices connected in the HDMI CEC system (S1030).

According to another embodiment of the present invention, a method of clarifying data bit timing of a host device (initiator) and a source device (follower) in an HDMI CEC system is proposed.

The devices connected in the HDMI CEC system may include one initiator and one or more followers. The initiator transmits a message and data, and the followers receive the data to set identification bits. The message is transmitted in the form of a frame that may include a start bit and data bits. The initiator provides a bit timing and a bit leading edge.

All of the data bits subsequent to the start bit have consistent timings. A transition occurring from high to low at the end of a data bit indicates the beginning of a next data bit, and this happens only when there is the next data bit.

In order to determine the bit timing of a received signal, the follower should identify edge detection of a CEC signal, and in order to more accurately determine the bit timing, the follower should be able to determine a rising edge and a falling edge with an accuracy of 0.1ms or less. In case the follower uses sampling at integer intervals to determine a value of a CEC signal, the sampling period of a data bit may be equal to or smaller than a predetermined value. For example, the sampling period may be equal to or smaller than 0.1ms.

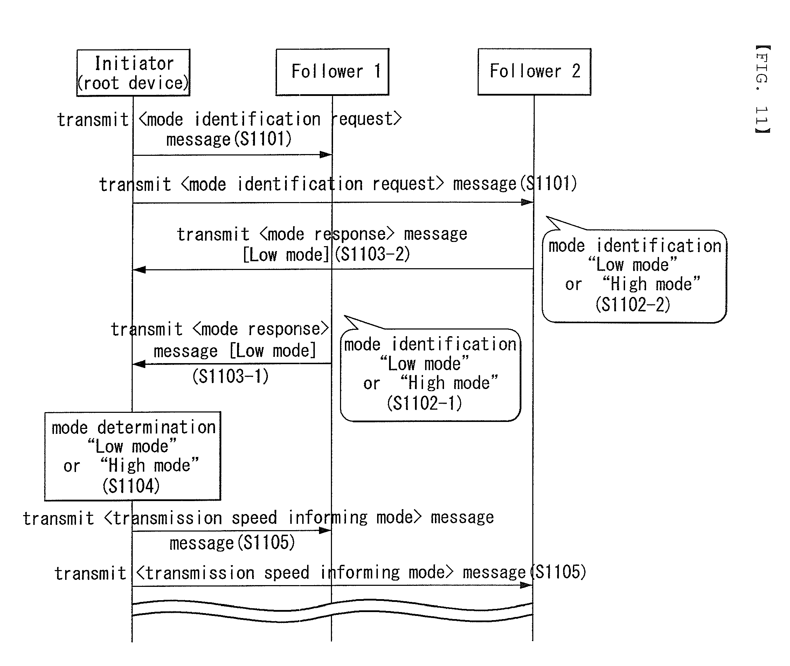

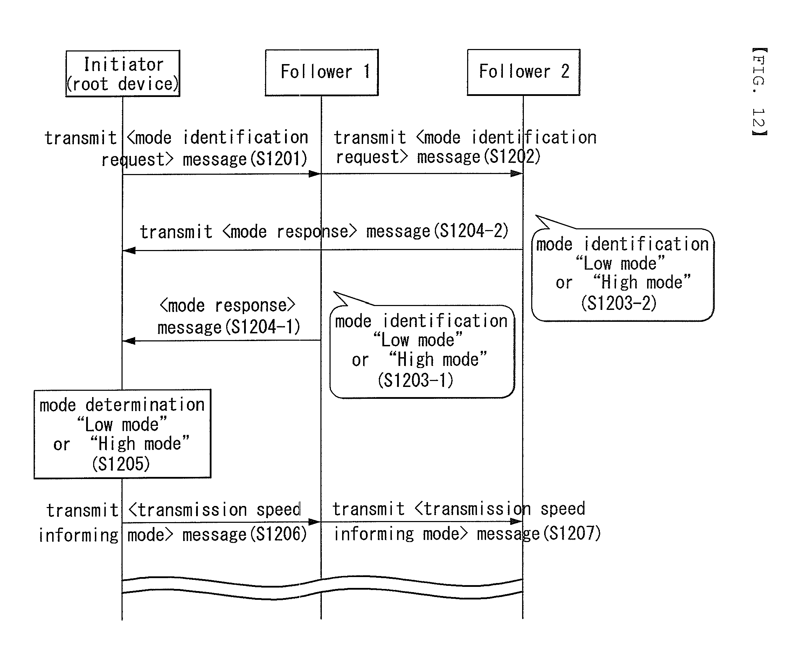

Figs. 11 and 12 are sequence diagrams illustrating modes that enable high-speed transmission from a bus interface to an HDMI CEC system according to embodiments of the present invention.

Fig. 11 is a sequence diagram illustrating a bottom-up mode checking scheme.

In an HDMI CEC system where an initiator (root device) is connected with a plurality of followers (follower 1 and follower 2) via a bus interface, the initiator (root device) may first transmit <mode identification request> messages, which are commands requesting to identify the maximum mode supportable by the devices, to all the connected devices (follower 1 and follower 2) via a common bus line (S1101).

When receiving the <mode identification request> messages, the followers may identify their modes (S1102-1 and S1102-2) and may transmit <mode response> messages to the initiator (root device). For example, in case the supportable maximum mode of follower 2 is low mode (S1102-2), low mode information may be added to the <mode response> message as a parameter value, and the same may be transmitted to the initiator (root device) (S1103-2). In case the supportable maximum mode of follower 1 is low mode (S1102-1), low mode information may be added to the <mode response> message as a parameter value, and the same may be transmitted to the initiator (root device) (S1103-1).

The initiator (root device) may receive the <mode response> messages from followers 1 and 2 and may determine transmission speed modes based on mode-related parameters (S1104). For example, the initiator (root device) may determine the transmission speed mode as low mode in case at least one of the received <mode response> messages include a low mode parameter.

The initiator (root device) may transmit <transmission speed informing mode> messages including the determined transmission speed mode to followers 1 and 2 (S1105). Followers 1 and 2 receive the <transmission speed informing mode> messages and transmit data based on the determined transmission speed mode.

Fig. 12 is a sequence diagram illustrating a top-down mode checking scheme.

In an HDMI CEC system where an initiator (root device) is connected with a plurality of followers (follower 1 and follower 2) via a bus interface, the initiator (root device) may first transmit a <mode identification request> message, which is a command requesting to identify a supportable maximum mode, to follower 1 (S1201). Follower 1 may transmit the <mode identification request> message, which is a command requesting to identify a supportable maximum mode, to follower 2 (S1202).

When receiving the <mode identification request> messages, followers 1 and 2 may identify their modes (S1202-1 and S1202-2) and may transmit <mode response> messages to the initiator (root device). For example, in case the supportable maximum mode of follower 2 is high mode, high mode information may be added to the <mode response> message as a parameter value, and the same may be transmitted to the initiator (root device) (S1204-2). In case the supportable maximum mode of follower 1 is high mode, high mode information may be added to the <mode response> message as a parameter value, and the same may be transmitted to the initiator (root device) (S1104-1).

The initiator (root device) may receive the <mode response> messages from followers 1 and 2 and may determine transmission speed modes based on mode-related parameters (S1205). For example, the initiator (root device) may determine the transmission speed mode as low mode in case at least one of the received <mode response> messages include a low mode parameter. As another example, if there is at least one time when the response message is not received, the transmission speed mode may be determined as low mode.

The initiator (root device) may transmit a <transmission speed informing mode> message including the determined transmission speed mode to follower 1 (S1206), and follower 1 may transmit the <transmission speed informing mode> message to follower 2 (S1207). Followers 1 and 2 receive the <transmission speed informing mode> messages and transmit data based on the determined transmission speed mode.

According to another embodiment of the present invention, the initiator (root device) may transmit <report mode> messages, which are commands requesting to identify supportable maximum mode, to connected followers. The initiator (root device) may transmit <set mode> messages to inform the determined data transmission speed to the followers.

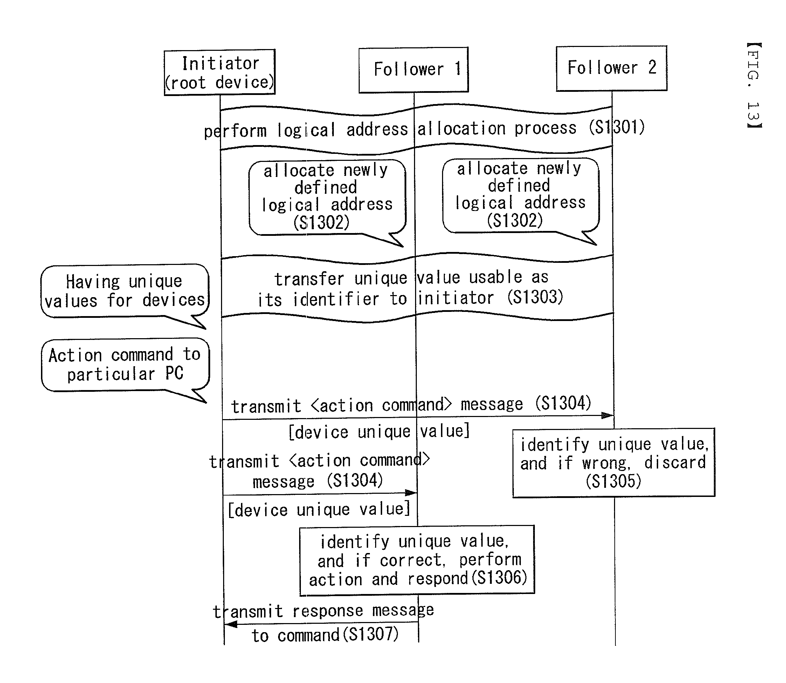

Fig. 13 is a sequence diagram illustrating expansion of logical addresses of devices in an HDMI CEC system according to an embodiment of the present invention.

Further, the instant embodiment of the present invention intends to define a protocol for a method that may enable the logical addresses used to be allocated through a single characteristic (function) to be allocated to various characteristics (devices) and also intends to define a method for expanding a logical address using a unique identifier that may be possessed by each device other than the logical address. For example, the unique identifier may mean a unique value allocated to a corresponding device or may mean at least one of IP address/MAC/UDN.

Referring to Fig. 13, in an HDMI CEC system where an initiator (root device) is connected with a plurality of followers (follower 1 and follower 2) via a bus interface, a general logical address allocation process is performed to allocate a newly defined logical address (S1301). Accordingly, the followers (for example, a PC or mobile device) may be jointly allocated with the newly defined logical address (S1302) and may transfer a unique value, which may be used as its identifier later, to the initiator (root device) (S1303).

The initiator (root device) may have unique values for the followers and may transmit an action command to a specific follower. For example, the initiator (root device) may transmit, to follower 1 and/or follower 2, an <action command> message alongside the unique values of follower 1 and/or follower 2 (S1304).

If the follower to perform the <action command> has been allocated to a common logical address, the initiator (root device) may transfer a command to the common logical address in a multicasting manner. The follower may compare the transmitted unique value with its own unique value to perform the action command (S1306), and if the unique values differ from each other, may discard the same (S1305). The follower to perform the action command may transmit a response message to the command to the initiator (root device) (S1307).

According to another embodiment of the present invention, a method may also be used in which, in order to be allocated with a logical address, it identifies whether its selected logical address is being used by other devices, and if all the logical addresses are being in use by the other devices, allocates a jointly usable logical address and additionally provides information indicating its type and a unique value to be used as its identifier.

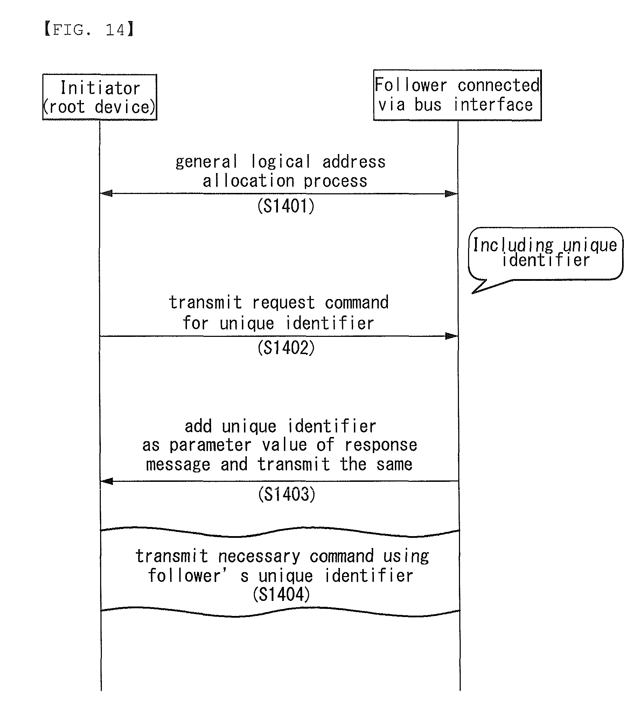

Fig. 14 is a sequence diagram illustrating a method of defining a command that enables exchange of information on an IP interface in an HDMI CEC system according to an embodiment of the present invention.

In an HDMI CEC system where an initiator (root device) is connected with a plurality of followers (follower 1 and follower 2) via a bus interface, a general logical address allocation process is performed (S1401). The plurality of followers may already include their respective unique identifiers.

The initiator (root device) may transmit a request command for the unique identifier already possessed by each follower (S1402). When receiving the request command, the follower may add its own unique identifier as a parameter value of a response message and may transmit the same to the initiator (root device) (S1403).

The initiator (root device) may transmit necessary commands using the obtained unique identifier of the follower (S1404).

For example, the unique identifier may mean a unique value allocated to a corresponding device or may mean at least one of IP address/MAC/UDN.

### [Industrial Applicability]

Although the present invention has been described and shown in connection with preferred embodiments thereof, it should be appreciated by one of ordinary skill in the art that various changes, modifications, and variations may be made thereto without departing from the spirit and scope of the present invention as defined in the following claims.

## Claims

1. A method for controlling a HDMI CEC device on HDMI CEC network including a plurality of devices, the method comprising:
receiving a message for requesting a physical address allocation of a new device when the new device is connected to the HDMI CEC network;
allocating a physical address of the new device based on the received message; and
allocating a plural logical addresses of the new device when the physical address of the new device is valid, the plural logical addresses corresponding to the plural device types of the new device, wherein at least one of the plural logical addresses is set by using a flag bit.

2. The method of claim 1, wherein the plural device types include a first device type and a second device type of the new device, the first device type being determined based on the new device's characteristics.

3. The method of claim 2, further comprising:
transmitting a physical address message to other devices within the HDMI CEC network, the physical address message indicating the first device type of the new device, wherein the physical address message indicates the association between the physical address and at least one of the plural logical addresses of the new device.

4. The method of claim 1, further comprising:
transmitting a feature report message to other devices within the HDMI CEC network, the feature report message indicating characteristics of the new device.

5. The method of claim 1, wherein the plural device types include at least one of TV, recording device, tuner, playback device, audio system, CEC switch, and processor.

6. The method of claim 1, wherein the step for allocating a plural logical addresses comprises:
transmitting a first polling message to a first logical address, the first polling message being a message indicating whether the first logical address is used by other device;
receiving a first response message in response to the first polling message; and
if the first logical address is not used by the other device, allocating the first logical address of the new device, and if the first logical address is used by the other device, transmitting a second polling message to a second logical address, the second polling message being a message indicating whether the second logical address is used by other device.

7. The method of claim 6, if the first logical address is used by the other device, the method further comprising:
receiving a second response message in response to the second polling message; and
checking whether the second logical address is the last logical address when the second logical address is used by the other device;
checking whether the new device has other device type when the second logical address is the last logical address; and
if the new device has the other device type, performing a logical address allocation process corresponding to the other device type, and if the new device don't have the other device type, allocating unregistered logical address.

8. The method of claim 1, wherein the received message is comprised of a frame including a start bit and data bits, wherein a sampling period of the data bits is equal to or smaller than a predetermined value.

9. A HDMI CEC device on HDMI CEC network including a plurality of devices, the HDMI CEC device comprising:
a communication unit configured to receive a message for requesting a physical address allocation of a new device when the new device is connected to the HDMI CEC network;
a central processing unit configured to allocate a physical address of the new device based on the received message,
and to allocate a plural logical addresses of the new device when the physical address of the new device is valid, the plural logical addresses corresponding to the plural device types of the new device, wherein at least one of the plural logical addresses is set by using a flag bit.

10. The HDMI CEC device of claim 9,The method of claim 19, wherein
wherein the plural device types include a first device type and a second device type of the new device, the first device type being determined based on the new device's characteristics.

11. The HDMI CEC device of claim 10, further comprising:
the communication unit configured to transmit a physical address message to other devices within the HDMI CEC network, the physical address message indicating the first device type of the new device, wherein the physical address message indicates the association between the physical address and at least one of the plural logical addresses of the new device.

12. The HDMI CEC device of claim 9, further comprising:
the communication unit configured to transmit a feature report message to other devices within the HDMI CEC network, the feature report message indicating characteristics of the new device.

13. The HDMI CEC device of claim 9, wherein the plural device types include at least one of TV, recording device, tuner, playback device, audio system, CEC switch, and processor.

14. The HDMI CEC device of claim 9, wherein the central processing unit further configures to:
transmit a first polling message to a first logical address, the first polling message being a message indicating whether the first logical address is used by other device;
receive a first response message in response to the first polling message; and
if the first logical address is not used by the other device, allocate the first logical address of the new device, and if the first logical address is used by the other device, transmit a second polling message to a second logical address, the second polling message being a message indicating whether the second logical address is used by other device.

15. The HDMI CEC device of claim 14, wherein if the first logical address is used by the other device, the central processing unit further configures to:
receive a second response message in response to the second polling message; and
check whether the second logical address is the last logical address when the second logical address is used by the other device;
check whether the new device has other device type when the second logical address is the last logical address; and
if the new device has the other device type, perform a logical address allocation process corresponding to the other device type, and if the new device don't have the other device type, allocate unregistered logical address.

16. The HDMI CEC device of claim 9, wherein the received message is comprised of a frame including a start bit and data bits, wherein a sampling period of the data bits is equal to or smaller than a predetermined value.
